(19) Europäisches Patentamt
European Patent Office
Office européen des brevets

(11) **EP 2 404 154 B1**

(12) **EUROPEAN PATENT SPECIFICATION**

(45) Date of publication and mention
of the grant of the patent:
**11.11.2020 Bulletin 2020/46**

(51) Int Cl.:
*G01N 15/02* (2006.01)          *G01N 21/51* (2006.01)
*G01N 21/03* (2006.01)          *G01N 21/47* (2006.01)

(21) Application number: **10707345.4**

(86) International application number:
**PCT/GB2010/050383**

(22) Date of filing: **04.03.2010**

(87) International publication number:
**WO 2010/100502 (10.09.2010 Gazette 2010/36)**

(54) **PARTICLE CHARACTERIZATION**

PARTIKELCHARAKTERISIERUNG

CARACTÉRISATION DE PARTICULE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.03.2009 US 209139 P**

(43) Date of publication of application:
**11.01.2012 Bulletin 2012/02**

(73) Proprietor: **Malvern Panalytical Limited
Malvern, Worcestershire WR14 1XZ (GB)**

(72) Inventor: **CORBETT, Jason Cecil William
Hereford HR4 0EU (GB)**

(74) Representative: **Barker Brettell LLP
100 Hagley Road
Edgbaston
Birmingham B16 8QQ (GB)**

(56) References cited:
**WO-A2-2007/131945          JP-A- 2008 116 314
US-A1- 2002 154 299          US-A1- 2006 077 390
US-A1- 2006 109 468          US-A1- 2006 110 818
US-A1- 2006 110 818          US-A1- 2007 224 087
US-A1- 2008 002 181          US-A1- 2008 285 032**

- **Anonymous: "Static light scattering -
Wikipedia", , 17 September 2016 (2016-09-17),
XP055340000, Retrieved from the Internet:
URL:https://en.wikipedia.org/wiki/Static_l
ight_scattering [retrieved on 2017-01-27]**
- **Anonymous: "Dynamic light scattering -
Wikipedia", , 28 November 2016 (2016-11-28),
XP055340001, Retrieved from the Internet:
URL:https://en.wikipedia.org/wiki/Dynamic_
light_scattering [retrieved on 2017-01-27]**

## Description

### Field of the Invention

This invention relates to methods and apparatus for detecting characteristics of particles suspended in a liquid sample droplet through the use of Dynamic Light Scattering (DLS) measurements.

### Background of the Invention

SLS and DLS measurements are typically performed using cuvettes with high-quality optical surfaces, which can be glass, in order to reduce scattering from static surfaces. These can be relatively expensive, and they can use a relatively large amount of sample material. It is also difficult to clean off residue from some types of samples, such as proteins.

US 2007/0224087 discloses an apparatus and method for airborne chemical and biological sample collection and detection, in which a gas-liquid interface is formed in a gap of a detection chamber and analysis of contaminants is carried out on light reflected or scattered from the meniscus of a drop to an optical sensor within the detection chamber.

US 2006/0110818 discloses an aerosol-into-liquid collector for collecting gas-borne particles from a large volume of gas into a small volume of liquid, in which a linear quadrupole concentrates particles flowing in a gas to combine with a small volume of collection liquid used as an input to an instrument for identifying analytes in the particles.

This means that these both documents disclose a method of measuring characteristics of particles in a liquid sample droplet, comprising:supporting the liquid sample droplet by surface tension;illuminating the supported liquid sample droplet along an illumination axis with a spatially coherent light beam so as to cause the coherent light to be scattered across a scattering zone;detecting at least a portion of the scattered light along a first predetermined scattering detection axis after it is scattered by the particles in the supported liquid sample droplet, wherein the illumination axis and the detection axis are oriented at an angle with respect to each other that allows light scattered at that angle across the scattering zone to be detected.

US 2008/285032 discloses a dynamic light scattering experiment.

### Summary of the Invention

According to the invention there is provided a method of and apparatus for measuring the size of particles suspended in a liquid sample droplet, as defined by the appended claims.

### Brief Description of the Drawing

**Fig. 1** is a series of diagrams illustrating the use of optical components to trap sample droplets in various static and dynamic light scattering measurement configurations with one or two-face optical layouts;

**Fig. 2** is diagram illustrating the use of optical components to trap a sample droplet in a dynamic light scattering measurement configuration with a multiple-face optical layout;

**Fig. 3A** is an isometric projection of a holder for use with light scattering measurement configurations such as those shown in Fig. 1;

**Fig. 3B** is a cross-sectional view of the holder of Fig. 3A that uses NIBS to position crossover of an incident beam;

**Fig. 3C** is a cutaway view of the holder of Fig. 3A;

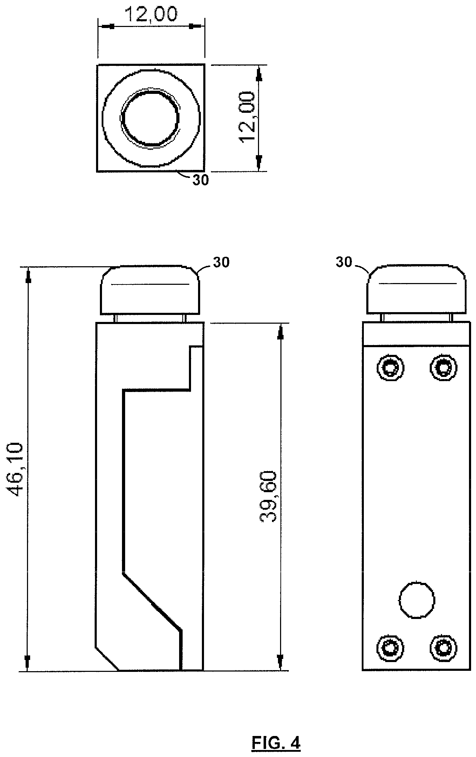

**Fig. 4** is a three-view drawing of the holder showing illustrative overall dimensions to fit in commonly found cuvette holders;

**Fig. 5A** is a diagram showing a sample trapped by surface tension within a capillary;

**Fig. 5B** is a diagram of a sample trapped by atmospheric pressure via a pinched top;

**Fig. 5C** is a diagram of a sample trapped by atmospheric pressure via a sealed top;

**Fig. 5D** is a diagram of a sample trapped within a capillary as part of a flow path;

**Fig. 6** is a cross-sectional diagram showing an optical geometry for a capillary tube;

**Fig. 7A** is an illustrative implementation of a capillary carrier including a slot at the top to trap and seal a flexible tube (attached to the top end of the capillary) for atmospheric trapping of sample as show in Fig. 5B;

**Fig. 7B** is an illustrative implementation of a capillary carrier including a capillary cutter 44; and

**Fig. 8** is three-view drawing of the capillary carrier of Fig. 7A holder showing illustrative overall dimensions to fit in commonly found cuvette holders.

## Detailed Description of an Illustrative Embodiment

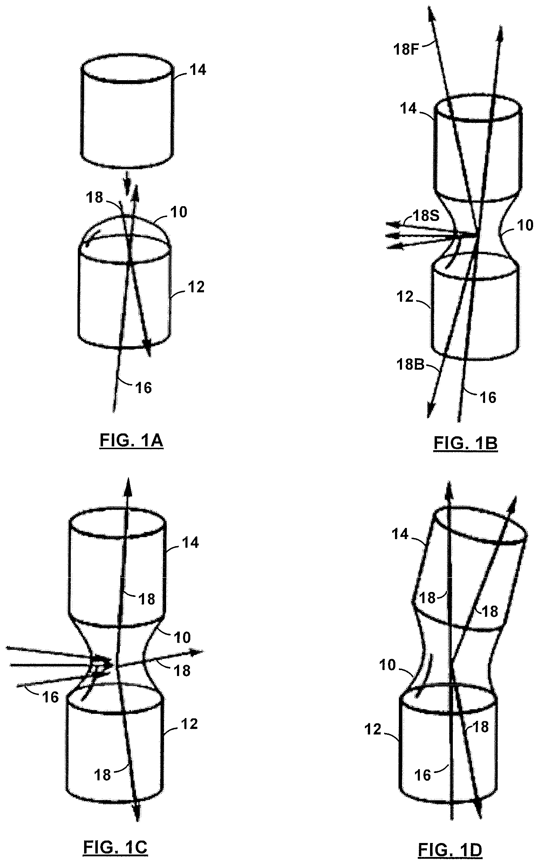

Referring to Fig. 1, an illustrative embodiment of a particle characteristics measuring instrument can perform trapped droplet sample presentation for dynamic light scattering instruments in forward, side and backscatter. Static light scattering instruments are examples not forming part of the present invention.

S/DLS measurements can require very small sample volumes to reduce costs. Further, S/DLS measurements require very high optical quality surfaces in order to reduce scattering from static surfaces, precluding the use of low optical quality disposable plastic cells. Further still, proteins, for example, are often very difficult to clean from glass cuvettes that are typically quite deep and prevent the entry of mechanical cleaning devices, such as brushes.

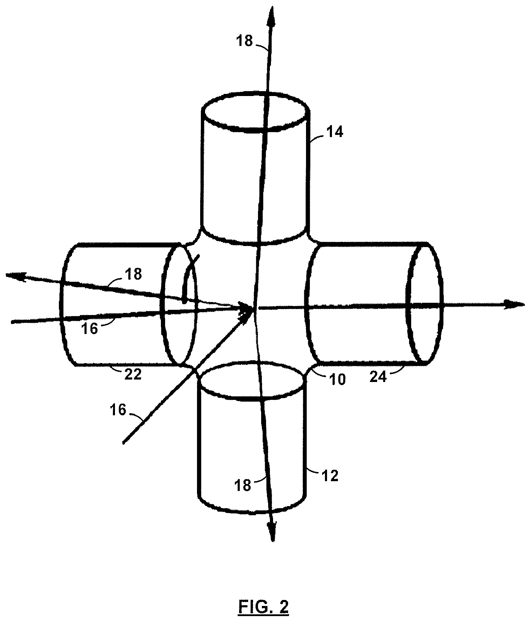

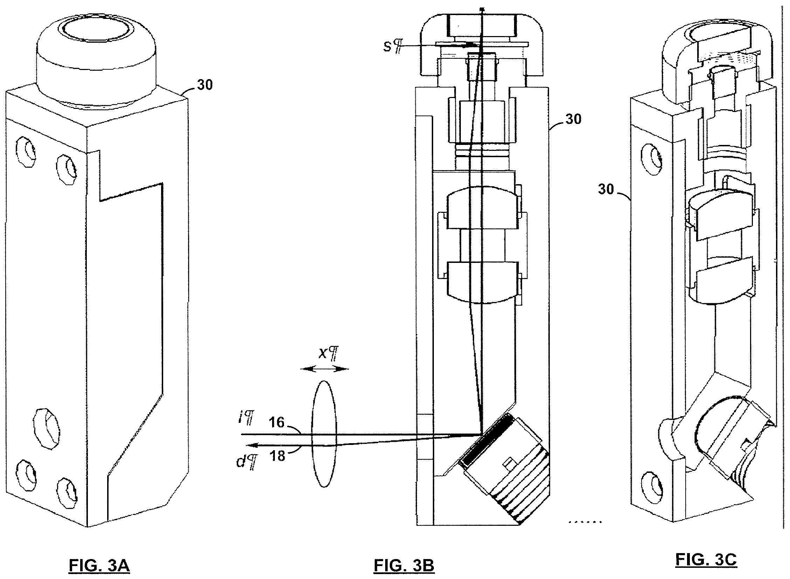

In instruments according to the invention, however, a sample droplet 10 is placed on a lower optical surface 12 -- see Fig. 1(a). In one embodiment, the incident light beam 16 and detected light beam 18 intersect within the droplet, with the droplet in contact only with the lower surface. In another embodiment the upper optical surface 14 is moved down until it makes contact with the sample - Fig. 1(b,c,d). The sample droplet wicks onto the upper surface, whilst remaining attached to the lower surface. The sample is trapped by surface tension. The upper surface is then drawn up to create a sample bridge within which the incident and detection beams can intersect. The distance between the optical surfaces would typically be of the order of 1-2mm. The position of the crossover (intersection of incident and detected light beams) within the trapped droplet can be set via separate optics: i.e. independently of the position of the optical surfaces, e.g. in backscatter via NIBS technology (described in US Pat. No. 6,016,195) - see Fig. 3 for example. The sample may also be trapped between more than two surfaces e.g. see Fig. 2 (12, 14, 22, 24), and opposing surfaces may be non-parallel - Fig. 1(d). The surfaces exposed to the sample may be any shape deemed convenient and/or necessary for efficient trapping of the sample via surface tension and/or optical deviation and focusing of the incident and detected beams.

In Fig. 1(b), the light enters the droplet 10 through one of the optical surfaces at some appropriate, well-defined angle and is detected in either forward 18F or backscatter 18B (again at some appropriate angle) through the optical surfaces or at a higher angle (typically, but not exclusively, 90 degrees to the input beam 18S) through the droplet side. In Fig. 1(c) the beam enters through the side of the droplet and is detected through either or both of upper and lower optical surfaces or through the droplet side. In all proposed cases, Fig. 1(a)-(d), all optical beams (incident and detected) should have a well defined angle with respect to each other and should be pseudo-monochromatic, with centre wavelength, $\lambda$. The ISO standard for DLS (ISO 22412) states that the reported size should be +/-2% of the validated value of a standard sample. The Cumulants analysis is the standard basic reduction and it equates the measured quantity, g1, the correlation function, to the fit,

$$g^1(q,\tau) = exp(-\Gamma\tau)\left(1 + \frac{\mu^2}{2!}\tau^2 + .....\right) \qquad (1)$$

$\Gamma$, is related to the diffusion coeffient, D via the q vector by

$$\Gamma = q^2 D \qquad (2)$$

where

$$q = \frac{4\pi n}{\lambda} sin\left(\frac{\theta}{2}\right) \qquad (3)$$

In which $\theta$ is the angle between the incident and detected beams. n, is the refractive index of the dispersant in which the particles are dispersed. The particle radius, r, is then related to the diffusion coefficient via the Stokes-Einstein relation

$$D = \frac{k_B T}{6\pi n r} \qquad (4)$$

Where, $k_B$ is the Boltzmann constant and T is the temperature. Via Eq.(2), $q^2$ should be defined to < 2% to meet the ISO standard and thence $\theta$ to within $1.414 = \sqrt{2} \leq 1.5\%$. We should also, then, define $\lambda$ to < 2% for DLS. The requirements of SLS are a subset of $\theta$ +/- 1.5% and $\lambda$ +/- 2%.

One embodiment of the scheme is shown in Fig. 3. The entire apparatus 30 can fit inside the cuvette holder of a Zetasizer Nano particle characterization instrument underneath the thermal cap in order to provide degree of thermal control appropriate to S/DLS. The Zetasizer Nano particle characterization instrument is available from Malvern Instruments of Malvern, UK, and is discussed in more detail in US application nos. 61/206,688 and 61/195,647.

Once measured the sample can be re-pipetted for further use and any material left on the optical surfaces removed with easy access.

Another approach not forming part of the present invention involves a semi disposable sample presentation scheme for the measurement of dynamic and static light scattering for size and molecular weight determination in forward, side and backscatter. This scheme can allow for presentation of very small sample volumes to D/SLS instruments in an easy to use and semi-disposable format.

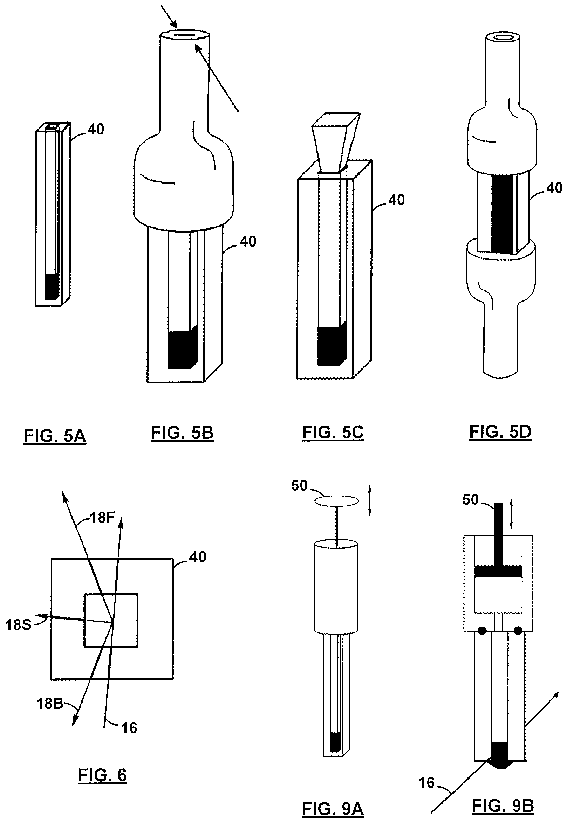

Good optical quality glass or plastic capillary tubing is available relatively cheaply now and the following scheme is proposed - Fig. 5. A length of capillary 40 is held in place (as required by the optical geometry of the instrument) and the tube filled from either end by attached tube or a pipette. The sample is retained by one of three mechanisms. In the first instance, the capillary is small enough to trap the sample by surface tension with the other end of the capillary left open to atmosphere - Fig. 5(a) - for example. In the second instance, the top of the capillary is sealed by some means - Fig. 5(b) and Fig. 5(c) for example - so that the sample is trapped within the capillary by atmospheric pressure at the capillary bottom (sample end in Fig. 5). In the third instance, the capillary forms part of a flow circuit - Fig. 5(d) for example.

The incident light beam may enter the sample through any side face of the capillary - Fig. 6. One or more detection beams may also exit the cell through any or all of the side faces of the capillary.

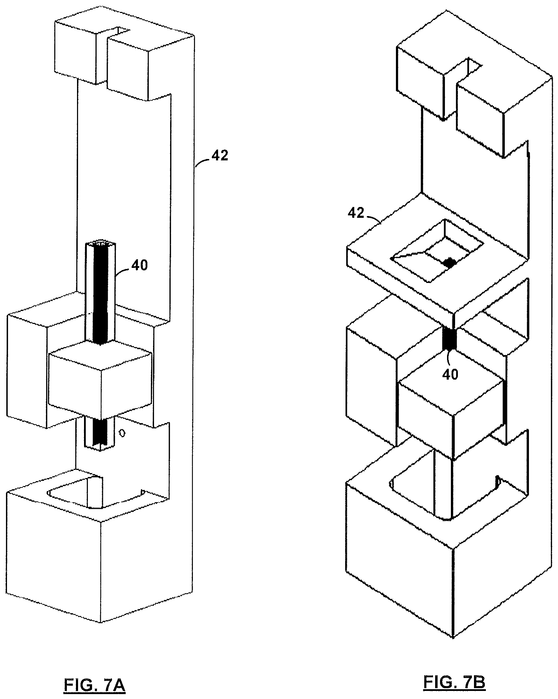

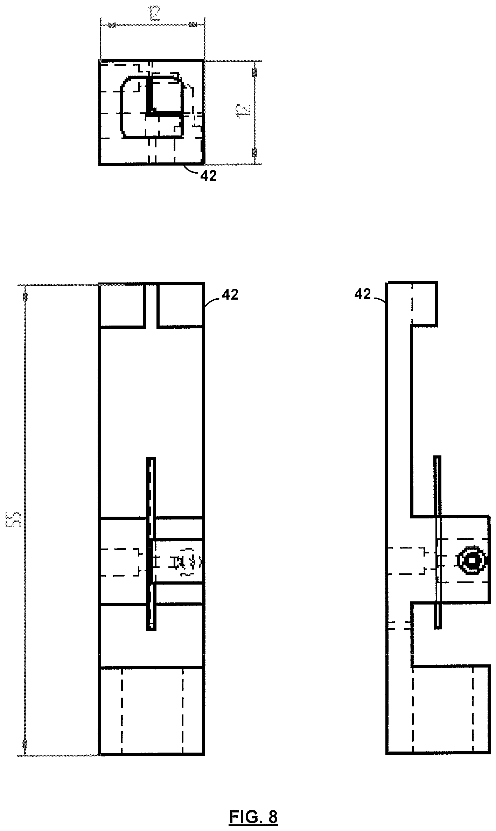

The capillary 40 is held in place by a carrier 42 - Fig. 7, which is then located into the instrument. The dimensions of the carrier match those of a standard cuvette, such that it enables use in an instrument in which standard cuvettes are used. Typical dimensions of such a carrier are shown in Fig. 8. A device for cutting the capillary to length whilst fitting into the carrier is also proposed, an example of which is shown in Fig. 7(b). Once in place the sample is pippetted into the bottom of the capillary as shown in Fig. 5 - the large hole in the base of the carrier - Fig. 7 - is included for this purpose. Once the measurement is complete the sample may then be repippetted out of the capillary for further analysis.

If the capillary becomes dirty in use it may be cheaply disposed of and a new one fitted for further measurements. Capillaries of 0.5mm internal dimensions and smaller are readily available thereby allowing convenient, semi-disposable measurement volumes of 10's to 100's of nanolitres for the first time.

Referring to Fig. 9, a piston 50 or other pumping mechanism may be provided to draw a precise amount of a liquid sample into a capillary tube, hold it (if necessary), and then expel it (if necessary). The use of a piston can allow even a very small drop to be positioned precisely within a capillary tube in the path of an incident beam. The piston may be advanced by a screw, a motor, or another suitable mechanism.

## Claims

1. A method of measuring characteristics of particles suspended in a liquid sample droplet (10), comprising:

    supporting the liquid sample droplet (10) by surface tension;
    illuminating the supported liquid sample droplet (10) along an illumination axis (16) with a spatially coherent light beam so as to cause the coherent light to be scattered across a scattering zone;
detecting at least a portion of the scattered light along a first predetermined scattering detection axis (18) after it is scattered by the particles in the supported liquid sample droplet (10), wherein the illumination axis (16) and the detection axis (18) are oriented at an angle with respect to each other that allows light scattered at that angle across the scattering zone to be detected; and
deriving a dynamic light scattering measurement for a predetermined angular resolution from results of the step of detecting to derive the characteristics of the particles suspended in the liquid sample droplet (10).

2. The method of claim 1 wherein the liquid sample droplet (10) is supported in a gap defined by two wicking surfaces.

3. The method of claim 1 wherein the step of detecting or illuminating is performed through a supporting surface of the liquid sample droplet.

4. The method of any preceding claim including further steps of detecting along further detection axes (18B, 18F, 18S) that are oriented at further angles with respect to the illumination axis (16).

5. The method of claim 1 wherein the step of supporting includes supporting the liquid sample droplet (10) on a sample carrier, and wherein the method further includes the step of positioning the sample carrier for performing a measurement by placing the sample carrier inside a holder with dimensions to fit in cuvette holders for holding a cuvette; wherein the step of detecting detects backscattered light.

6. The method of claim 5, wherein the sample carrier comprises a reflector, and illuminating the supported liquid sample droplet comprises using the reflector to direct a horizontal incident light beam to illuminate the supported liquid sample droplet in a vertical direction.

7. The method of claim 6, wherein the sample carrier comprises an aperture, and illuminating the supported liquid sample droplet comprises illuminating the reflector through the aperture.

8. The method of any of claims 1 to 4 wherein the step of detecting detects: i) backscattered light; and/or ii) time-averaged or time-dependent scattered light for a sample.

9. An instrument for measuring characteristics of particles suspended in a liquid sample droplet (10), comprising:

one or more wicking surfaces for receiving and supporting a liquid sample droplet;
a spatially coherent light source having an illumination axis (16) directed proximate the one or more wicking surfaces so as to cause coherent light from the source to be scattered across a scattering zone;
at least one spatially coherent scattered light detector positioned to receive light scattered by the particles in the liquid sample along a first predetermined scattering detection axis (18) that is oriented at an angle with respect to the illumination axis of the light source when the liquid sample (10) is trapped by the one or more wicking surfaces, wherein the angle between the predetermined scattering detection axis and the illumination axis (16) allows the detector to detect coherent light scattered at that angle across the scattering zone,
wherein the instrument is configured to derive a dynamic light scattering measurement for a predetermined angular resolution from the detected light to derive the characteristics of the particles suspended in the liquid sample droplet (10).

10. The instrument of claim 9 wherein the one or more wicking surfaces are each part of one or more transparent optical parts, the spatially coherent light source being positioned to direct light through a first wicking surface of the one or more wicking surfaces and the light detector being positioned to receive scattered light through the first wicking surface.

11. The instrument of claims 9 or 10 wherein the detector is positioned to receive backscattered light from the sample.

12. The instrument of claim 11 further including a supporting body positioned to hold the one or more wicking surface in place, the supporting body being part of a removable sample carrier (30) that can be removed from the instrument.

13. The instrument of claim 12, wherein the instrument further comprises a holder for holding a cuvette, and the sample carrier is configured to fit inside the holder, the holder having dimensions to fit in cuvette holders for holding a cuvette.

**14.** The instrument of claim 12 or 13, wherein the sample carrier comprises a reflector operable to direct a horizontal incident light beam (16) in a vertical direction to illuminate the sample droplet on one of the one or more wicking surfaces, the supporting body (30) holding the reflector in place.

**15.** The instrument of claim 14, wherein the sample carrier comprises an aperture for the horizontal incident light beam (16) to pass through in order to the reach the reflector.

**16.** The instrument of any of claims 9 to 11 wherein a gap defined by a first and second of the one or more wicking surfaces is sized to hold an aqueous sample between the first wicking surface and the second wicking surface by surface tension.


**Patentansprüche**

**1.** Verfahren zum Messen der Eigenschaften von Partikeln, die in einem Flüssigkeitsprobentröpfchen (10) suspendiert sind, umfassend:

Stützen des Flüssigkeitsprobentröpfchens (10) durch Oberflächenspannung;
Beleuchten des gestützten Flüssigkeitsprobentröpfchens (10) entlang einer Beleuchtungsachse (16) mit einem räumlich kohärenten Lichtstrahl, um zu bewirken, dass das kohärente Licht über eine Streuzone gestreut wird;
Detektieren mindestens eines Teils des Streulichts entlang einer ersten vorbestimmten Streuungs-Detektionsachse (18), nachdem es von den Partikeln in dem gestützten Flüssigkeitsprobentröpfchen (10) gestreut wurde, wobei die Beleuchtungsachse (16) und die Detektionsachse (18) in einem Winkel in Bezug aufeinander ausgerichtet sind, der es ermöglicht, das in diesem Winkel über die Streuzone gestreute Licht zu detektieren; und
Ableiten einer dynamischen Lichtstreuungsmessung für eine vorbestimmte Winkelauflösung aus den Ergebnissen des Schrittes des Detektierens, um die Eigenschaften der in dem Flüssigkeitsprobentröpfchen (10) suspendierten Partikel abzuleiten.

**2.** Verfahren nach Anspruch 1, wobei das Flüssigkeitsprobentröpfchen (10) in einem Spalt gestützt wird, der durch zwei Oberflächen mit Dochtwirkung definiert ist.

**3.** Verfahren nach Anspruch 1, wobei der Schritt des Detektierens oder Beleuchtens durch eine Stützfläche des Flüssigkeitsprobentröpfchens durchgeführt wird.

**4.** Verfahren nach einem der vorstehenden Ansprüche, einschließlich weiterer Schritte des Detektierens entlang weiterer Detektionsachsen (18B, 18F, 18S), die in weiteren Winkeln in Bezug auf die Beleuchtungsachse (16) ausgerichtet sind.

**5.** Verfahren nach Anspruch 1, wobei der Schritt des Stützens das Stützen des Flüssigkeitsprobentröpfchens (10) auf einem Probenträger einschließt, und wobei das Verfahren weiter den Schritt des Positionierens des Probenträgers zum Durchführen einer Messung einschließt, indem der Probenträger in einem Halter mit Abmessungen angeordnet wird, die in Küvettenhalter zum Halten einer Küvette passen; wobei der Schritt des Detektierens Rückstreulicht detektiert.

**6.** Verfahren nach Anspruch 5, wobei der Probenträger einen Reflektor umfasst und das Beleuchten des gestützten Flüssigkeitsprobentröpfchens die Verwendung des Reflektors umfasst, um einen horizontal einfallenden Lichtstrahl zu lenken, um das gestützte Flüssigkeitsprobentröpfchen in einer vertikalen Richtung zu beleuchten.

**7.** Verfahren nach Anspruch 6, wobei der Probenträger eine Öffnung umfasst und das Beleuchten des gestützten Flüssigkeitsprobentröpfchens das Beleuchten des Reflektors durch die Öffnung umfasst.

**8.** Verfahren nach einem der Ansprüche 1 bis 4, wobei der Schritt des Detektierens Folgendes detektiert: i) Rückstreulicht; und/oder ii) zeitgemitteltes oder zeitabhängiges Streulicht für eine Probe.

**9.** Instrument zum Messen der Eigenschaften von Partikeln, die in einem Flüssigkeitsprobentröpfchen (10) suspendiert sind, umfassend:

eine oder mehrere Oberflächen mit Dochtwirkung zum Aufnehmen und Stützen eines Flüssigkeitsprobentröpfchens;

eine räumlich kohärente Lichtquelle, aufweisend eine Beleuchtungsachse (16), die in die Nähe der einen oder mehreren Oberflächen mit Dochtwirkung gelenkt ist, um zu bewirken, dass kohärentes Licht von der Quelle über eine Streuzone gestreut wird;

mindestens einen räumlich kohärenten Streulichtdetektor, der so positioniert ist, dass er Licht aufnimmt, das von den Partikeln in der Flüssigkeitsprobe entlang einer ersten vorbestimmten Streudetektionsachse (18) gestreut wird, die in einem Winkel in Bezug auf die Beleuchtungsachse der Lichtquelle ausgerichtet ist, wenn die Flüssigkeitsprobe (10) von der einen oder den mehreren Oberflächen mit Dochtwirkung festgehalten wird, wobei der Winkel zwischen der vorbestimmten Streudetektionsachse und der Beleuchtungsachse (16) es dem Detektor ermöglicht, kohärentes Licht zu detektieren, das in diesem Winkel über die Streuzone gestreut wird,

wobei das Instrument konfiguriert ist, um eine dynamische Lichtstreuungsmessung für eine vorbestimmte Winkelauflösung aus dem erfassten Licht abzuleiten, um die Eigenschaften der in dem Flüssigkeitsprobentröpfchen (10) suspendierten Partikel abzuleiten.

10. Instrument nach Anspruch 9, wobei die eine oder die mehreren Oberflächen mit Dochtwirkung jeweils Teil eines oder mehrerer transparenter optischer Teile sind, wobei die räumlich kohärente Lichtquelle so positioniert ist, dass sie Licht durch eine erste Oberfläche mit Dochtwirkung der einen oder mehreren Oberflächen mit Dochtwirkung lenkt, und der Lichtdetektor so positioniert ist, dass er durch die erste Oberfläche mit Dochtwirkung gestreutes Licht aufnimmt.

11. Instrument nach Anspruch 9 oder 10, wobei der Detektor so positioniert ist, dass er Rückstreulicht von der Probe aufnimmt.

12. Instrument nach Anspruch 11, weiter einschließend einen Stützkörper, der so positioniert ist, dass er die eine oder mehreren Oberfläche(n) mit Dochtwirkung an Ort und Stelle hält, wobei der Stützkörper Teil eines abnehmbaren Probenträgers (30) ist, der von dem Instrument abgenommen werden kann.

13. Instrument nach Anspruch 12, wobei das Instrument weiter einen Halter zum Halten einer Küvette umfasst und der Probenträger konfiguriert ist, um in den Halter zu passen, wobei der Halter Abmessungen aufweist, um in Küvettenhalter zum Halten einer Küvette zu passen.

14. Instrument nach Anspruch 12 oder 13, wobei der Probenträger einen Reflektor umfasst, der betreibbar ist, um einen horizontal einfallenden Lichtstrahl (16) in eine vertikale Richtung zu lenken, um das Probentröpfchen auf einer der einen oder mehreren Oberflächen mit Dochtwirkung zu beleuchten, wobei der Stützkörper (30) den Reflektor an Ort und Stelle hält.

15. Instrument nach Anspruch 14, wobei der Probenträger eine Öffnung umfasst, durch die der horizontal einfallende Lichtstrahl (16) hindurchtreten kann, um den Reflektor zu erreichen.

16. Instrument nach einem der Ansprüche 9 bis 11, wobei ein Spalt, der durch eine erste und eine zweite der einen oder mehreren Oberflächen mit Dochtwirkung definiert ist, so bemessen ist, dass eine wässrige Probe zwischen der ersten Oberfläche mit Dochtwirkung und der zweiten Oberfläche mit Dochtwirkung durch Oberflächenspannung gehalten wird.

**Revendications**

1. Procédé de mesure de caractéristiques de particules en suspension dans une gouttelette d'échantillon liquide (10), comprenant :

le support de la gouttelette d'échantillon liquide (10) par tension superficielle ;
l'éclairage de la gouttelette d'échantillon liquide (10) supportée le long d'un axe d'éclairage (16) avec un faisceau lumineux spatialement cohérent de manière à provoquer la diffusion de la lumière cohérente à travers une zone de diffusion ;
la détection d'au moins une partie de la lumière diffusée le long d'un premier axe de détection (18) de diffusion prédéterminé après qu'elle est diffusée par les particules dans la gouttelette d'échantillon liquide (10) supportée, dans lequel l'axe d'éclairage (16) et l'axe de détection (18) sont orientés à un angle l'un par rapport à l'autre qui permet à une lumière diffusée à cet angle à travers la zone de diffusion d'être détectée ; et

l'obtention d'une mesure de diffusion dynamique de lumière pour une résolution angulaire prédéterminée à partir des résultats de l'étape de détection pour obtenir les caractéristiques des particules en suspension dans la gouttelette d'échantillon liquide (10).

2. Procédé selon la revendication 1 dans lequel la gouttelette d'échantillon liquide (10) est supportée dans un espace défini par deux surfaces à effet de mèche.

3. Procédé selon la revendication 1 dans lequel l'étape de détection ou d'éclairage est effectuée à travers une surface de support de la gouttelette d'échantillon liquide.

4. Procédé selon une quelconque revendication précédente incluant des étapes supplémentaires de détection le long d'axes de détection (18B, 18F, 18S) supplémentaires qui sont orientés à d'autres angles par rapport à l'axe d'éclairage (16).

5. Procédé selon la revendication 1 dans lequel l'étape de support inclut le support de la gouttelette d'échantillon liquide (10) sur un porte-échantillon, et dans lequel le procédé inclut en outre l'étape de positionnement du porte-échantillon pour effectuer une mesure en plaçant le porte-échantillon à l'intérieur d'un dispositif de maintien ayant des dimensions adaptées à des dispositifs de maintien de cuvette pour maintenir une cuvette ; dans lequel l'étape de détection détecte une lumière rétrodiffusée.

6. Procédé selon la revendication 5, dans lequel le porte-échantillon comprend un réflecteur, et l'éclairage de la gouttelette d'échantillon liquide supportée comprend l'utilisation du réflecteur pour diriger un faisceau lumineux incident horizontal pour éclairer la gouttelette d'échantillon liquide supportée dans une direction verticale.

7. Procédé selon la revendication 6, dans lequel le porte-échantillon comprend une ouverture, et l'éclairage de la gouttelette d'échantillon liquide supportée comprend l'éclairage du réflecteur à travers l'ouverture.

8. Procédé selon l'une quelconque des revendications 1 à 4 dans lequel l'étape de détection détecte : i) une lumière rétrodiffusée ; et/ou ii) une lumière diffusée moyennée dans le temps ou dépendante du temps pour un échantillon.

9. Instrument pour mesurer des caractéristiques de particules en suspension dans une gouttelette d'échantillon liquide (10), comprenant :

une ou plusieurs surfaces à effet de mèche pour recevoir et supporter une gouttelette d'échantillon liquide ;
une source de lumière spatialement cohérente présentant un axe d'éclairage (16) dirigé à proximité des une ou plusieurs surfaces à effet de mèche de manière à provoquer la diffusion de la lumière cohérente provenant de la source à travers une zone de diffusion ;
au moins un détecteur de lumière diffusée spatialement cohérente positionné pour recevoir une lumière diffusée par les particules dans l'échantillon liquide le long d'un premier axe de détection (18) de diffusion prédéterminé qui est orienté à un angle par rapport à l'axe d'éclairage de la source de lumière quand l'échantillon liquide (10) est piégé par les une ou plusieurs surfaces à effet de mèche, dans lequel l'angle entre l'axe de détection de diffusion prédéterminé et l'axe d'éclairage (16) permet au détecteur de détecter une lumière cohérente diffusée à cet angle à travers la zone de diffusion,
dans lequel l'instrument est configuré pour obtenir une mesure de diffusion dynamique de lumière pour une résolution angulaire prédéterminée à partir de la lumière détectée pour obtenir les caractéristiques des particules en suspension dans la gouttelette d'échantillon liquide (10).

10. Instrument selon la revendication 9 dans lequel les une ou plusieurs surfaces à effet de mèche font chacune partie d'une ou de plusieurs pièces optiques transparentes, la source de lumière spatialement cohérente étant positionnée pour diriger une lumière à travers une première surface à effet de mèche des une ou plusieurs surfaces à effet de mèche et le détecteur de lumière étant positionné pour recevoir une lumière diffusée à travers la première surface à effet de mèche.

11. Instrument selon les revendications 9 ou 10 dans lequel le détecteur est positionné pour recevoir une lumière rétrodiffusée provenant de l'échantillon.

12. Instrument selon la revendication 11 incluant en outre un corps de support positionné pour maintenir les une ou plusieurs surfaces à effet de mèche en place, le corps de support faisant partie d'un porte-échantillon amovible (30) qui peut être retiré de l'instrument.

13. Instrument selon la revendication 12, dans lequel l'instrument comprend en outre un dispositif de maintien pour maintenir une cuvette, et le porte-échantillon est configuré pour s'installer à l'intérieur du dispositif de maintien, le dispositif de maintien présentant des dimensions adaptées à des dispositifs de maintien de cuvette pour maintenir une cuvette.

14. Instrument selon la revendication 12 ou 13, dans lequel le porte-échantillon comprend un réflecteur servant à diriger un faisceau lumineux incident horizontal (16) dans une direction verticale pour éclairer la gouttelette d'échantillon sur l'une des une ou plusieurs surfaces à effet de mèche, le corps de support (30) maintenant le réflecteur en place.

15. Instrument selon la revendication 14, dans lequel le porte-échantillon comprend une ouverture pour que le faisceau lumineux incident horizontal (16) passe à travers afin d'atteindre le réflecteur.

16. Instrument selon l'une quelconque des revendications 9 à 11 dans lequel un espace défini par une première et une seconde des une ou plusieurs surfaces à effet de mèche est dimensionné pour maintenir un échantillon aqueux entre la première surface à effet de mèche et la seconde surface à effet de mèche par tension superficielle.

FIG. 1A

FIG. 1B

FIG. 1C

FIG. 1D

FIG. 2

FIG. 3C

FIG. 3B

FIG. 3A

12,00

12,00

30

30

30

46,10

39,60

FIG. 4

FIG. 5A      FIG. 5B      FIG. 5C      FIG. 5D

FIG. 6

FIG. 9A      FIG. 9B

42

40

**FIG. 7A**

42

40

**FIG. 7B**

FIG. 8

**REFERENCES CITED IN THE DESCRIPTION**

**Patent documents cited in the description**

- US 20070224087 A
- US 20060110818 A
- US 2008285032 A
- US 6016195 A
- US 61206688 B
- US 61195647 B